# EUROPÄISCHE PATENTSCHRIFT

(11) **EP 4 072 260 B1**
(45) Veröffentlichungstag und Bekanntmachung des Hinweises auf die Patenterteilung: **22.02.2023**
(21) Anmeldenummer: 21716700.6
(22) Anmeldetag: 01.04.2021
(51) Int. Cl.: A01C 7/08

(54) **PNEUMATISCHE VERTEILMASCHINE**
PNEUMATIC DISTRIBUTION MACHINE
MACHINE DE DISTRIBUTION PNEUMATIQUE

(30) Priorität: 08.04.2020 DE 102020109791
(43) Veröffentlichungstag der Anmeldung: 19.10.2022
(60) Teilanmeldung: 22210069.5
(73) Patentinhaber: Amazonen-Werke H. Dreyer SE & Co. KG, 49205 Hasbergen (DE)
(72) Erfinder: WIEN, Thomas, 28816 Stuhr (DE)
(86) Internationale Anmeldenummer: PCT/EP2021/058633
(87) Internationale Veröffentlichungsnummer: WO 2021/204677

(56) Entgegenhaltungen:
- EP-A1- 3 520 592
- EP-A2- 0 799 560
- DE-A1-102015 116 378
- DE-A1-102016 218 531

## Beschreibung

Die Erfindung betrifft eine pneumatische Verteilmaschine gemäß dem Oberbegriff des Patentanspruches 1.

Eine derartige Verteilmaschine ist in EP 642 729 A1 beschrieben. Die Verteilmaschine kann als Drillmaschine oder Einzelkornsämaschine ausgeführt sein und wird zur Verteilung von körnigem Material, wie Saatgut und/oder Dünger, über eine Mehrzahl nebeneinander angeordneter Ausbringeinrichtungen, wie Bodenbearbeitungswerkzeugen, genutzt. Diese Verteilmaschine verfügt über eine Einzelreihenschaltung, die es erlaubt die Ausbringung an einzelnen Ausbringeinrichtungen zu unterbrechen.

Aus der Druckschrift EP 3 520 592 A1 ist ein Verfahren zum Ausringen von körnigem Material bekannt. Aus den Druckschriften DE 10 2015 116 378 A1 und DE 10 2016 218 531 A1 ist jeweils ein Verteilerturm einer landwirtschaftlichen Verteilmaschine zum Ausbringen von granulatartigem Verteilgut bekannt. Aus der Druckschrift EP 0 799 560 A2 ist eine Abluftleitung für eine pneumatisch arbeitende Verteilmaschine bekannt.

Ferner ist aus der nach dem Prioritätstag dieser Anmeldung veröffentlichten europäischen Patentanmeldung EP 3 698 614 A1 eine Vorrichtung für einen Verteilerturm einer landwirtschaftlichen Maschine zum fluidstromunterstützten Ausbringen eines granulatartigen Materials bekannt.

Um die Einzelreihenschaltung zu ermöglichen, weist die Verteilmaschine einen Verteilerkopf auf, der dazu eingerichtet ist, eine ihm aus einem Vorratsbehälter mittels eines Fördergebläses zugeleitete Luft-Material-Hauptströmung in mehrere Luft-Material-Einzelströmungen aufzuteilen. Von dem Verteilerkopf gelangt die Luft-Material-Einzelströmung in eine Rückführeinrichtung oder alternativ direkt in eine Ausbringleitung, welche das körnige Material zu einer der Ausbringeinrichtungen befördert. Die Anzahl der Rückführeinrichtungen entspricht hierbei der Anzahl der Ausbringeinrichtungen an denen die Ausbringung unterbrochen werden kann.

Die Rückführeinrichtung weist ein Umlenkelement auf, welches dazu eingerichtet ist, in einer Ausbringstellung eine in einen Einströmbereich der Rückführeinrichtung einströmende Luft-Material-Einzelströmung einem mit einer Ausbringleitung verbundenen Ausbringbereich der Rückführeinrichtung zuzuleiten und in einer Absperrstellung eine in den Einströmbereich der Rückführeinrichtung einströmende Luft-Material-Einzelströmung einem mit einer Rückführleitung der Rückführeinrichtung verbundenen Rückführbereich zuzuleiten. Über die Rückführleitung gelangt das nicht ausgebrachte Material so zurück in die Hauptförderleitung und steht wieder zur Ausbringung zur Verfügung.

Das Fördergebläse und der Vorratsbehälter sind in einer Ausführungsform dieser Verteilmaschine im Frontanbau eines Ackerschleppers angeordnet, während der Verteilerkopf und die Ausbringeinrichtungen im Heckanbau angeordnet sind, so dass eine das Fördergebläse, den Vorratsbehälter, und insbesondere die Dosiereinrichtung, und den Verteilerkopf verbindende Hauptförderleitung besonders lang, insbesondere mehrere Meter lang, ausgeführt ist. Die Hauptförderleitung erstreckt sich somit zwischen dem Fördergebläse und dem Verteilerkopf, insbesondere über zumindest 8 Meter. Es sind ferner gezogene Verteilmaschinen bekannt, bei denen regelmäßig eine besonders lange, zumindest 4 Meter lange, Hauptförderleitung zwischen dem nahe des Vorratsbehälter angeordneten Fördergebläse und den Ausbringeinrichtungen bzw. dem Verteilerkopf erforderlich ist, weil die Vorratsbehälter sich lang in Fahrtrichtung erstrecken und der Verteilerkopf nahe der Ausbringeinrichtungen dahinter und/oder seitlich davon angeordnet ist. Derartig lange Hauptförderleitungen weisen allerdings regelmäßig das Problem auf, dass über ihre Länge an den Leitungswandungen entstehende Reibung einen erheblichen Druckverlust erzeugen. Diese Energie steht der Luft-Material-Hauptströmung somit nicht zur Förderung des Materials zur Verfügung, woraus eine reduzierte Fördergeschwindigkeit resultiert. Besonders problematisch ist, dass sich bei reduzierter Fördergeschwindigkeit Ablagerungen des körnigen Materials in der Hauptförderleitung bilden können, welche eine sogenannte Schwallförderung auslöst. Schwallförderung, das heißt, dass das Teile des in der Hauptförderleitung abgelagerten Materials von der Luft-Material-Hauptströmung mitgerissen werden, was zu einer Mengenschwankungen bei Verteilung des körnigen Materials durch die Ausbringeinrichtungen führt und somit eine ungleichmäßige Ausbringung bedingt.

Ferner problematisch bei der in der EP 642 729 A1 offenbarten Verteilmaschine ist, dass in der Absperrstellung angeordnete Umlenkelemente der Rückführeinrichtungen einen zusätzlichen Druckverlust erzeugen. Die Luft-Material-Einzelströmung kann in diesem Fall nicht entweichen und wird zusätzlich zu der Luft-Material-Hauptströmung wieder in die Hauptförderleitung eingespeist, wodurch ein ungewollter Staudruck entsteht. Mit zunehmender Anzahl von Ausbringeinrichtungen deren Ausbringung unterbrochen ist, also Rückführeinrichtungen deren Umlenkelemente in der Absperrstellung angeordnet sind, steigt der Druckverlust in der Hauptförderleitung somit weiter. Übersteigt der Druckverlust bzw. unterschreitet die Fördergeschwindigkeit eine kritische Schwelle kann die Luft-Material-Hauptströmung zusammenbrechen.

Die vorstehend beschriebene Verteilmaschine sieht zur Linderung dieser Probleme Zuluftdüsen vor, an denen durch eine Querschnittsverengung der Hauptförderleitung eine Sogwirkung an der zur Umgebung geöffneten Zuluftdüse entstehen soll, so dass genügend Förderluft zur Verfügung steht. Allerdings wird das ist der Luft-Material-Hauptströmung geförderte körnige Material durch die Querschnittsverengung abgebremst, was dem gewünschten Effekt insofern entgegenwirkt, als dass ausreichend Förderluft auf Kosten reduzierter Fördergeschwindigkeit zur Verfügung gestellt wird. Die Probleme sinkender Fördergeschwindigkeit infolge großer Druckverluste in langen Hauptförderleitungen lassen sich somit nur unzureichend beheben.

Die der Erfindung zugrunde liegende Aufgabe besteht folglich darin, eine Verteilmaschine mit langer Hauptförderleitung weiterzubilden und die im Stand der Technik bekannten Nachteile zu vermeiden. Insbesondere soll der Druckverlust in der Hauptförderleitung und/oder am Verteilerkopf reduziert werden.

Diese Aufgabe wird erfindungsgemäß durch eine Verteilmaschine mit den Merkmalen der unabhängigen Anspruchs 1 gelöst. Vorteilhafte Weiterbildungen der erfindungsgemäßen Verteilmaschine sind Gegenstand der abhängigen Unteransprüche.

Erfindungsgemäß ist vorgesehen, dass die Rückführeinrichtung eine den Rückführbereich der Rückführeinrichtung und den Ausbringbereich der Rückführeinrichtung verbindende Bypassleitung aufweist. Die Erfindung macht sich die Erkenntnis zunutze, dass durch die pneumatische Verbindung zwischen dem Rückführbereich und dem Ausbringbereich der durch eine Rückführeinrichtung, deren Umlenkelement insbesondere in der Absperrstellung angeordnet ist, entstehende Staudruck in vorteilhafter Weise reduziert ist. Dem Verteilerkopf zugeleitete überschüssige Förderluft aus der Luft-Material-Hauptströmung ist über die Bypassleitung, insbesondere über die Ausbringleitung vorzugsweise an die Ausbringeinrichtungen, ableitbar, so dass der Staudruck und somit der Druckverlust in der Hauptförderleitung und am Verteilerkopf reduziert ist.

In einer vorteilhaften Weiterbildung der erfindungsgemäßen Verteilmaschine ist vorgesehen, dass die lange Hauptförderleitung einen durchströmten Querschnitt mit einem Durchmesser und eine durchströmte Länge aufweist, wobei das Verhältnis von Länge zu Durchmesser zumindest 30 beträgt. Untersuchungen haben gezeigt, dass die Erfindung ab einem Durchmesser-Länge-Verhältnis von 30 besondere Wirkung zeigt. Je größer das Verhältnis von Durchmesser zu Länge der Hauptförderleitung ist, umso vorteilhafter wirkt die Erfindung.

Um den Staudruck in der Hauptförderleitung und am Verteilerkopf und somit den Druckverlust weiter zu senken, ist in einer weiteren vorteilhaften Weiterbildung der Erfindung die Rückführleitung der Rückführeinrichtung mit einem Einspeisebereich der Hauptförderleitung verbunden, wobei die Hauptförderleitung zwischen dem Einspeisebereich und dem Verteilerkopf einen größeren Querschnitt aufweist als in Strömungsrichtung vor dem Einspeisebereich. Die Hauptförderleitung ist zwischen dem Einspeisebereich und dem Verteilerkopf somit dazu eingerichtet, eine erhöhte Förderluftmenge und/oder Menge der Luft-Material-Hauptströmung zu fördern. Eine Erhöhung der förderbaren Strömungs-Menge reduziert das Risiko, dass sich ein messbarer Staudruck bildet. Insbesondere ist vorgesehen, dass die Hauptförderleitung zwischen dem Einspeisebereich und dem Verteilerkopf einen größeren Durchmesser aufweist als im Bereich einer in Strömungsrichtung vor dem Einspeisebereich angeordneten Düse, welche in die Hauptförderleitung integriert ist. Somit ist die Wirkung der Düse in vorteilhafter Weise verbessert. Die Düse kann austauschbar sein, so dass sich ihre Wirkung in der Hauptförderleitung einstellen lässt durch die Wahl einer Düse mit geeignetem Durchmesser.

In einer vorteilhaften Weiterbildung der vorstehenden Ausführungsform der erfindungsgemäßen Verteilmaschine ist vorgesehen, dass das Verhältnis von Länge der Hauptförderleitung zu dem größeren Durchmesser der Hauptförderleitung zwischen dem Einspeisebereich und dem Verteilerkopf zumindest 25 beträgt.

In einer weiteren vorteilhaften Ausführungsform der erfindungsgemäßen Verteilmaschine weist die lange Hauptförderleitung zumindest zwei, vorzugsweise zumindest drei, flexible Schlauchelemente auf. Mittels eines flexiblen Schlauchelementes sind zwei durch das Schlauchelement verbundene Teile der Hauptförderleitung relativ zueinander beweglich, so dass mittels der Hauptförderleitung zueinander verstellbare und/oder klappbare Komponenten der Verteilmaschine verbindbar sind. Das Fördergebläse, der Vorratsbehälter und der Verteilerkopf können beweglich gelagert sein, so dass die Hauptförderleitung infolge dieser Maßnahme, insbesondere über mehrere Meter, dazu eingerichtet ist, diese Komponenten der Verteilmaschine zu verbinden. Die Verteilmaschine ist infolge dieser Maßnahme dazu eingerichtet, in Arbeitsstellung große Arbeitsbreiten abzudecken und für die Transportfahrt auf öffentlichen Straßen auf die zulässige Transportbreite beschränkt zu werden durch Verbringung zweier mit Hilfe eines flexiblen Schlauchelements verbundenen Komponenten relativ zueinander.

Um die Luft-Material-Hauptströmung dem Verteilerkopf mit geringem Druckverlust zuzuleiten, ist die erfindungsgemäße Verteilmaschine ferner dahingehend vorteilhaft weitergebildet, dass die lange Hauptförderleitung zumindest zwei Krümmer, vorzugsweise mit zumindest 90 Grad Krümmung, aufweist. Die Krümmer können einzeln oder in Summe vorzugsweise eine 90 Grad Krümmung erreichen. Es ist insbesondere vorstellbar, dass beide Krümmer eine Krümmung von 45 Grad aufweisen.

Erfindungsgemäß ist das Umlenkelement dazu eingerichtet, die Bypassleitung in der Ausbringstellung abzusperren. Eine Leckage der Luft-Material-Einzelströmung von der Rückführeinrichtung in Richtung der Hauptförderleitung ist somit in vorteilhafter Weise unterbunden. Ferner entsteht in der Hauptförderleitung somit kein Druckverlust, da die Luft-Material-Hauptströmung in der Ausbringstellung des Umlenkelements nicht über den Bypass entweichen kann.

In einer besonders vorteilhaften Weiterbildung der erfindungsgemäßen Verteilmaschine ist das Umlenkelement dazu eingerichtet, die Bypassleitung in der Absperrstellung freizugeben. Somit ist die Bypassleitung in der Absperrstellung des Umlenkelements geöffnet, so dass überschüssige Förderluft aus der Luft-Material-Einzelströmung abgeschieden werden kann und der durch die zurückgeführte Luft-Material-Einzelströmung verursachte Staudruck reduziert ist.

Um das Umlenkelement für seine Funktionen in vorteilhafter Weise geometrisch auszuformen, ist in einer weiteren vorteilhaften Weiterbildung der erfindungsgemäßen Verteilmaschine vorgesehen, dass das Umlenkelement als Wippe mit zwei Wippenschenkeln ausgebildet ist, wobei sich die Wippenschenkel jeweils von einer Drehachse des Umlenkelements radial nach außen erstrecken.

Die erfindungsgemäße Verteilmaschine, bei der das Umlenkelement als Wippe ausgebildet ist, ist ferner vorteilhaft dadurch weitergebildet, dass ein Wippenschenkel des Umlenkelements dazu eingerichtet ist, in der Ausbringstellung des Umlenkelements die Bypassleitung der Rückführeinrichtung abzusperren. Alternativ oder zusätzlich ist ein Wippenschenkel des Umlenkelements dazu eingerichtet ist, in der Ausbringstellung des Umlenkelements einen Durchgang zwischen dem Einströmbereich der Rückführeinrichtung und dem Rückführbereich der Rückführeinrichtung abzusperren. Alternativ oder zusätzlich ist vorgesehen, dass zumindest ein Wippenschenkel des Umlenkelements dazu eingerichtet ist, in der Absperrstellung des Umlenkelements einen Durchgang zwischen dem Einströmbereich der Rückführeinrichtung und dem Ausbringbereich der Rückführeinrichtung abzusperren. In vorteilhafter Weise ist das als Wippe ausgeführte Umlenkelement so mit einer Doppelfunktion versehen.

In einer weiteren vorteilhaften Weiterbildung der erfindungsgemäßen Verteilmaschine ist vorgesehen, dass die Hauptförderleitung einen Druckwiderstand aufweist, wobei der Druckwiderstand zumindest ein Drittel der von dem Fördergebläse erzeugbaren Druckdifferenz beträgt. Der Druckwiderstand der Hauptförderleitung kann sich aus der Summe der Druckwiderstände seiner Komponenten zwischen dem Fördergebläse und dem Verteilerkopf ergeben. Untersuchungen haben gezeigt, dass das Fördergebläse gemäß dieser Weiterbildung geeignet auf die Hauptförderleitung abgestimmt ist und die Erfindung ab diesem Verhältnis von Druckwiderstand zu mittels dem Fördergebläse erzeugbarer Druckdifferenz besondere Wirkung hat.

Eine weitere vorteilhafte Ausführungsform der erfindungsgemäßen Verteilmaschine zeichnet sich dadurch aus, dass die Verteilmaschine eine Anzahl von Rückführeinrichtungen umfasst, wobei die Umlenkelemente einer ersten Teilmenge der Anzahl von Rückführeinrichtungen zwischen der Ausbringstellung und der Absperrstellung verbringbar sind und die Umlenkelemente einer zweiten Teilmenge, die insbesondere der Menge der übrigen Rückführeinrichtungen entspricht, der Anzahl von Rückführeinrichtungen, vorzugsweise dauerhaft, in der Absperrstellung angeordnet sind. Die Verteilmaschine kann mehr Rückführeinrichtungen als Ausbringeinrichtungen aufweisen. Die Umlenkelemente der mit einer Ausbringeinrichtung über eine Ausbringleitung verbundenen Rückführeinrichtungen sind zwischen der Ausbringstellung und der Absperrstellung verbringbar. Die Umlenkelemente der Rückführeinrichtungen, die nicht mit einer Ausbringeinrichtung verbunden sind, können dauerhaft in der Absperrstellung angeordnet sein, wobei die Ausbringbereiche dieser Rückführeinrichtungen mit einer Abluftleitung verbunden sein können. Die Teilmenge der Rückführeinrichtungen, deren Umlenkelement in Absperrstellung angeordnet ist, kann somit in vorteilhafter Weise, vorzugsweise dauerhaft, zur Ableitung überschüssiger Förderluft genutzt werden. Dem Verteilerkopf ist somit eine erhöhte Menge der Luft-Material-Hauptströmung zuleitbar.

Weitere Einzelheiten der Erfindung sind der Beispielsbeschreibung und den Zeichnungen zu entnehmen. Die Zeichnungen zeigen
- Fig.1: eine schematische Darstellung einer erfindungsgemäßen Verteilmaschine mit einem mit Rückführeinrichtungen versehenen Verteilerkopf,
- Fig.2a: eine Rückführeinrichtung in Ausbringstellung in Schnittansicht, und
- Fig.2b: die Rückführeinrichtung gemäß Fig.2a in Absperrstellung in Schnittansicht.

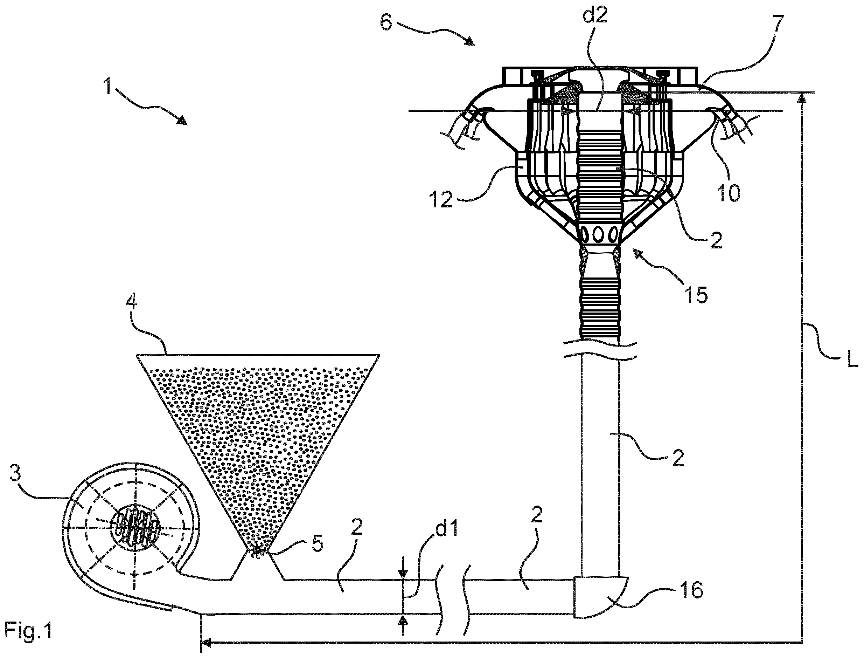

Eine erfindungsgemäße Verteilmaschine 1 mit einer langen Hauptförderleitung 2 ist in Fig.1 in schematischer Darstellung zu sehen. Die Hauptförderleitung 2 erstreckt sich über mehrere Meter, insbesondere zumindest 4 Meter, und verbindet ein Fördergebläse 3, einen Vorratsbehälter 4 für körniges Material, dem eine Dosiereinrichtung 5 für körniges Material zugeordnet ist, und einen Verteilerkopf 6 der Verteilmaschine 1. Die Dosiereinrichtung 5 ist dazu eingerichtet körniges Material, wie Saatgut und/oder Dünger, aus dem Vorratsbehälter 4 in einstellbarer Menge in die Hauptförderleitung 2 abzugeben. Das Fördergebläse 3 saugt Luft aus der Umgebung an, verdichtet diese und leitet sie in die Hauptförderleitung 2 ein, so dass eine Luft-Material Hauptströmung erzeugt wird. Das Fördergebläse 3 ist somit zur Erzeugung einer Druckdifferenz zwischen Umwelt und Hauptförderleitung 2 eingerichtet. Die Luft-Material-Hauptströmung wird über die Hauptförderleitung 2 dem Verteilerkopf 6 zugeleitet, welcher dazu eingerichtet ist, die zugeleitete Luft-Material-Hauptströmung in mehrere Luft-Material-Einzelströmungen aufzuteilen.

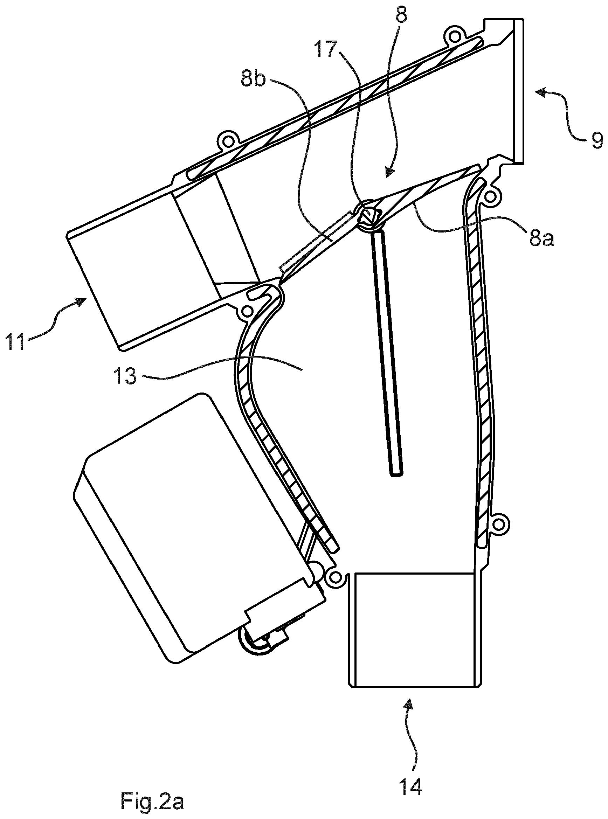

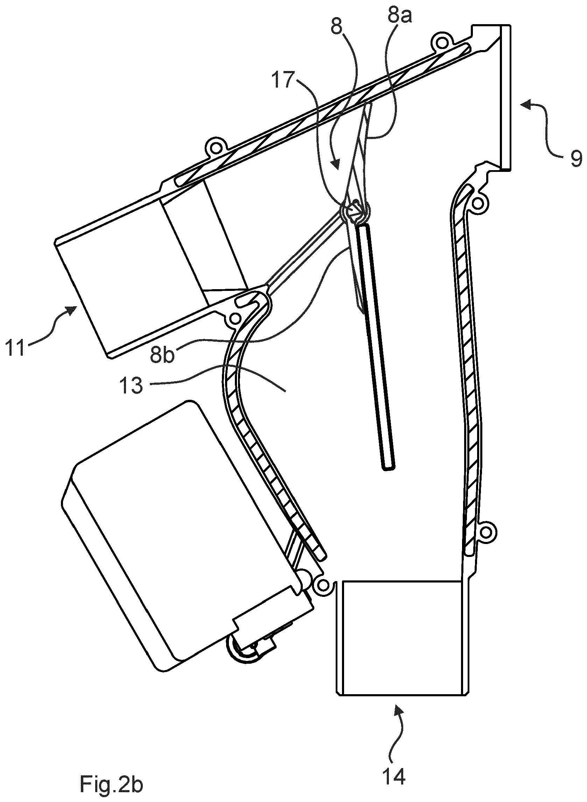

Dem Verteilerkopf 6 schließt sich eine Mehrzahl von Rückführeinrichtungen 7, in diesem Fall insgesamt 24 Stück von denen aufgrund der Schnittansicht nur 12 zu sehen sind, an, welche jeweils ein bewegliches Umlenkelement 8 aufweisen, das dazu eingerichtet ist, in einer Ausbringstellung, wie in Fig.2a gezeigt, eine in einen Einströmbereich 9 der Rückführeinrichtung 7 einströmende Luft-Material-Einzelströmung einem mit einer Ausbringleitung 10 verbundenen Ausbringbereich 11 der Rückführeinrichtung 7 zuzuleiten und in einer Absperrstellung, wie in Fig.2b gezeigt, eine in den Einströmbereich 9 der Rückführeinrichtung 7 einströmende Luft-Material-Einzelströmung einem mit einer Rückführleitung 12 der Rückführeinrichtung 7 verbundenen Rückführbereich 14 zuzuleiten. Die Rückführeinrichtung 7 ist mittels einer den Rückführbereich 14 der Rückführeinrichtung 7 und den Ausbringbereich 11 der Rückführeinrichtung 7 verbindende Bypassleitung 13 dazu eingerichtet, einen Staudruck im Verteilerkopf 6 und der Hauptförderleitung 2 zu reduzieren und den Druckverlust in der Hauptförderleitung 2 so zu senken.

Die Hauptförderleitung 2 erstreckt sich zwischen dem Fördergebläse 3 und dem Verteilerkopf 6 über eine durchströmte Länge L und weist dabei einen durchströmten Querschnitt mit einem Durchmesser d1 auf. Da sich die Hauptförderleitung 2 zumindest über mehrere Meter erstreckt, beträgt Verhältnis von Länge L zu Durchmesser d1 der Hauptförderleitung 2 zumindest 30. Zwischen einem mit den Rückführleitungen 12 der Rückführeinrichtungen 7 verbundenen Einspeisebereich 15 und dem Verteilerkopf 6 weist die Hauptförderleitung 2 jedoch einen größeren Querschnitt mit einem zweiten Durchmesser d2 auf als in Strömungsrichtung vor dem Einspeisebereich 15. Bei dieser Verteilmaschine 1 beträgt das Verhältnis von Länge L der Hauptförderleitung 2 zu dem zweiten, größeren Durchmesser d2 der Hauptförderleitung 2 zwischen dem Einspeisebereich 15 und dem Verteilerkopf 6 zumindest 25. In Strömungsrichtung vor dem Einspeisebereich 15 ist eine Düse angeordnet, welche in die Hauptförderleitung 2 integriert ist. Die Düse beschleunigt die Luft-Material-Hauptströmung zusätzlich vor dem Eintreten in den Abschnitt der Hauptförderleitung 2 mit dem zweiten, größeren Durchmesser d2 zwischen dem Einspeisebereich 15 und dem Verteilerkopf 6.

Da das Fördergebläse 3 und der Verteilerkopf 6 beweglich zueinander gelagert sind, ist vorgesehen, dass die Hauptförderleitung 2 mehrere nicht genauer dargestellte, flexible Schlauchelemente umfasst. Die Schlauchelemente verbinden zwei Teile der Hauptförderleitung 2 flexibel, so dass diese relativ zueinander bewegbar sind. Ferner weist die Hauptförderleitung 2 zumindest zwei Krümmer 16, von denen in Fig.1 nur ein einziger gezeigt ist, auf, um die Luft-Material-Hauptströmung dem Verteilerkopf 6 in geeigneter Weise zuzuleiten. Der Krümmer 16 weist bei der gezeigten Verteilmaschine 1 eine Krümmung von 90 Grad auf. Es ist ebenso denkbar zwei Krümmer 16 mit jeweils 45 Grad Krümmung zu verwenden. Die Hauptförderleitung 2 weist somit einen Druckwiderstand auf, der zumindest ein Drittel der von dem Fördergebläse 3 erzeugbaren Druckdifferenz beträgt.

In den Fig.2a, 2b ist eine Rückführeinrichtung 7 in Ausbringstellung und in Absperrstellung in Schnittansicht zu sehen. Wie Fig.2a zeigt, ist das Umlenkelement 8 dazu eingerichtet ist, die Bypassleitung 13 in der Ausbringstellung abzusperren. In der Absperrstellung, die in Fig.2b gezeigt ist, ist das Umlenkelement 8 hingegen dazu eingerichtet, die Bypassleitung 13 freizugeben. Das Umlenkelement 8 ist hierzu als Wippe mit zwei Wippenschenkeln 8a, 8b ausgebildet. Die Wippenschenkel 8a, 8b erstrecken sich von einer Drehachse 17 des Umlenkelements 8 radial nach außen.

Der eine Wippenschenkel 8b ist dazu eingerichtet, in der Ausbringstellung des Umlenkelements 8, gemäß Fig.2a, die Bypassleitung 13 der Rückführeinrichtung 7 abzusperren. Der andere Wippenschenkel 8a hingegen ist dazu eingerichtet, in der Ausbringstellung des Umlenkelements 8, wie Fig.2a zeigt, einen Durchgang zwischen dem Einströmbereich 9 der Rückführeinrichtung 7 und dem Rückführbereich 14 der Rückführeinrichtung 7 abzusperren und in der Absperrstellung des Umlenkelements 8, gemäß Fig.2b, einen Durchgang zwischen dem Einströmbereich 9 der Rückführeinrichtung 7 und dem Ausbringbereich 11 der Rückführeinrichtung 7 abzusperren.

Bei dieser Verteilmaschine 1 sind an den Verteilerkopf 6 insgesamt 24 Rückführeinrichtungen 7 angeschlossen, von denen wie bereits erläuterrt in der schematischen Darstellung in Fig.1 aufgrund der Schnittansicht des Verteilerkopfes 6 und dem mit dem Verteilerkopf 6 verbundenen Abschnitt der Hauptförderleitung 2 nur 12 zu sehen sind. Die Umlenkelemente 8 einer Teilmenge von 18 der 24 Rückführeinrichtungen 7 sind zwischen der Ausbringstellung, gemäß Fig.2a, und der Absperrstellung, gemäß Fig.2b, verbringbar, so dass an über Ausbringleitungen 10 mit den Ausbringbereichen 11 dieser Rückführeinrichtungen 7 verbundenen Ausbringeinrichtungen eine Einzelreihenschaltung umsetzbar ist. Die Umlenkelemente 8 einer zweiten Teilmenge, nämlich der übrigen 6 von 24 Rückführeinrichtung 7, sind dauerhaft in Absperrstellung angeordnet, so dass jederzeit eine ausreichende Abführmöglichkeit für überschüssige Förderluft gegeben ist.

### Bezugszeichenliste

- 1: Verteilmaschine
- 2: Hauptförderleitung
- 3: Fördergebläse
- 4: Vorratsbehälter
- 5: Dosiereinrichtung
- 6: Verteilerkopf
- 7: Rückführeinrichtung
- 8: Umlenkelement
- 8a, 8b: Wippenschenkel
- 9: Einströmbereich
- 10: Ausbringleitung
- 11: Ausbringbereich
- 12: Rückführleitung
- 13: Bypassleitung
- 14: Rückführbereich
- 15: Einspeisebereich
- d1: Durchmesser
- L: Länge
- d2: zweiter Durchmesser
- 16: Krümmer
- 17: Drehachse

## Patentansprüche

1. Pneumatische Verteilmaschine (1) für körniges Material, mit
- zumindest einem Vorratsbehälter (4) für das körnige Material;
- zumindest einem Fördergebläse (3) zur Erzeugung einer Luft-Material-Hauptströmung;
- zumindest einem Verteilerkopf (6), welcher dazu eingerichtet ist, die dem Verteilerkopf (6) zugeleitete Luft-Material-Hauptströmung in mehrere Luft-Material-Einzelströmungen aufzuteilen;
- einer langen, das Fördergebläse (3), den Vorratsbehälter (4) und den Verteilerkopf (6) verbindenden Hauptförderleitung (2); und
- zumindest einer Rückführeinrichtung (7), welche ein bewegliches Umlenkelement (8) aufweist, welches dazu eingerichtet ist, in einer Ausbringstellung eine in einen Einströmbereich (9) der Rückführeinrichtung (7) einströmende Luft-Material-Einzelströmung einem mit einer Ausbringleitung (10) verbundenen Ausbringbereich (11) der Rückführeinrichtung (7) zuzuleiten und in einer Absperrstellung eine in den Einströmbereich (9) der Rückführeinrichtung (7) einströmende Luft-Material-Einzelströmung einem mit einer Rückführleitung (12) der Rückführeinrichtung (7) verbundenen Rückführbereich (14) zuzuleiten, wobei die Rückführeinrichtung (7) eine den Rückführbereich (14) der Rückführeinrichtung (7) und den Ausbringbereich (11) der Rückführeinrichtung (7) verbindende Bypassleitung (13) aufweist;
**dadurch gekennzeichnet, dass** das Umlenkelement (8) dazu eingerichtet ist, die Bypassleitung (13) in der Ausbringstellung abzusperren.

2. Verteilmaschine (1) nach Anspruch 1,
**dadurch gekennzeichnet, dass** die lange Hauptförderleitung (2) einen durchströmten Querschnitt mit einem Durchmesser (d1) und eine durchströmte Länge (L) aufweist, dass das Verhältnis von Länge (L) zu Durchmesser (d1) der Hauptförderleitung (2) zumindest 30 beträgt.

3. Verteilmaschine (1) nach zumindest einem der vorstehenden Ansprüche, **dadurch gekennzeichnet, dass** die Rückführleitung (12) der Rückführeinrichtung (7) mit einem Einspeisebereich (15) der Hauptförderleitung (2) verbunden ist, wobei die Hauptförderleitung (2) zwischen dem Einspeisebereich (15) und dem Verteilerkopf (6) einen größeren Querschnitt mit einem zweiten Durchmesser (d2) aufweist als in Strömungsrichtung vor dem Einspeisebereich (15), insbesondere als im Bereich einer in Strömungsrichtung vor dem Einspeisebereich (15) angeordneten Düse, welche in die Hauptförderleitung (2) integriert ist.

4. Verteilmaschine (1) nach Anspruch 3,
**dadurch gekennzeichnet, dass** das Verhältnis von Länge (L) der Hauptförderleitung (2) zu dem größeren Durchmesser (d2) der Hauptförderleitung (2) zwischen dem Einspeisebereich (15) und dem Verteilerkopf (6) zumindest 25 beträgt.

5. Verteilmaschine (1) nach zumindest einem der vorstehenden Ansprüche, **dadurch gekennzeichnet, dass** die lange Hauptförderleitung (2) zumindest zwei, vorzugsweise zumindest drei, flexible Schlauchelemente aufweist.

6. Verteilmaschine (1) nach zumindest einem der vorstehenden Ansprüche, **dadurch gekennzeichnet, dass** die lange Hauptförderleitung (2) zumindest zwei Krümmer (16), vorzugsweise mit zumindest 90 Grad Krümmung (16), aufweist.

7. Verteilmaschine (1) nach einem der vorstehenden Ansprüche,
**dadurch gekennzeichnet, dass** das Umlenkelement (8) dazu eingerichtet ist, die Bypassleitung (13) in der Absperrstellung freizugeben.

8. Verteilmaschine (1) nach einem der vorstehenden Ansprüche,
**dadurch gekennzeichnet, dass** das Umlenkelement (8) als Wippe mit zwei Wippenschenkeln (8a, 8b) ausgebildet ist, wobei sich die Wippenschenkel (8a, 8b) jeweils von einer Drehachse (17) des Umlenkelements (8) radial nach außen erstrecken.

9. Verteilmaschine (1) nach Anspruch 8, **dadurch gekennzeichnet, dass**
- ein Wippenschenkel (8b) des Umlenkelements (8) dazu eingerichtet ist, in der Ausbringstellung des Umlenkelements (8) die Bypassleitung (13) der Rückführeinrichtung (7) abzusperren;
- ein Wippenschenkel (8a) des Umlenkelements (8) dazu eingerichtet ist, in der Ausbringstellung des Umlenkelements (8) einen Durchgang zwischen dem Einströmbereich (9) der Rückführeinrichtung (7) und dem Rückführbereich (14) der Rückführeinrichtung (7) abzusperren; und/oder
- zumindest ein Wippenschenkel (8a) des Umlenkelements (8) dazu eingerichtet ist, in der Absperrstellung des Umlenkelements (8) einen Durchgang zwischen dem Einströmbereich (9) der Rückführeinrichtung (7) und dem Ausbringbereich (11) der Rückführeinrichtung (7) abzusperren.

10. Verteilmaschine (1) nach zumindest einem der vorstehenden Ansprüche, **dadurch gekennzeichnet, dass** die Hauptförderleitung (2) einen Druckwiderstand aufweist, wobei der Druckwiderstand zumindest ein Drittel der von dem Fördergebläse (3) erzeugbaren Druckdifferenz beträgt.

11. Verteilmaschine (1) nach zumindest einem der vorstehenden Ansprüche, **dadurch gekennzeichnet, dass** die Verteilmaschine (1) eine Anzahl von Rückführeinrichtungen (7) umfasst, wobei die Umlenkelemente (8) einer ersten Teilmenge der Anzahl von Rückführeinrichtungen (7) zwischen der Ausbringstellung und der Absperrstellung verbringbar sind und die Umlenkelemente (8) einer zweiten Teilmenge, die insbesondere der Menge der übrigen Rückführeinrichtungen (7) entspricht, der Anzahl von Rückführeinrichtungen (7), vorzugsweise dauerhaft, in der Absperrstellung angeordnet sind.

## Claims

1. A pneumatic distribution machine (1) for granular material, comprising
- at least one storage container (4) for the granular material;
- at least one conveyor blower (3) for generating a main air-material flow;
- at least one distributor head (6) which is configured to divide the main air-material flow supplied to the distributor head (6) into a plurality of individual air-material flows;
- a long main conveyor line (2) connecting the conveyor blower (3), the storage container (4), and the distributor head (6); and
- at least one return device (7) which comprises a movable deflector element (8) which is configured to supply, in a discharge position, an individual air-material flow flowing into an inflow region (9) of the return device (7) to a discharge region (11) of the return device (7), said discharge region being connected to a discharge line (10); and, in a block position, to supply an individual air-material flow flowing into the inflow region (9) of the return device (7) to a return region (14) connected to a return line (12) of the return device (7), wherein the return device (7) comprises a bypass line (13) connecting the return region (14) of the return device (7) and the discharge region (11) of the return device (7);
**characterized in that** the deflector element (8) is configured to block the bypass line (13) in the discharge position.

2. The distribution machine (1) according to claim 1,
**characterized in that** the long main conveyor line (2) has a flow-through cross section with a diameter (d1) and a flow-through length (L), such that the ratio of length (L) to diameter (d1) of the main conveyor line (2) is at least 30.

3. The distribution machine (1) according to at least one of the preceding claims, **characterized in that** the return line (12) of the return device (7) is connected to an infeed region (15) of the main conveyor line (2), wherein the main conveyor line (2) has a larger cross section with a second diameter (d2) between the feed region (15) and the distributor head (6) than in the flow direction upstream of the infeed region (15), in particular than in the region of a nozzle arranged upstream of the feed region (15) in the flow direction, which nozzle is integrated into the main conveyor line (2).

4. The distribution machine (1) according to claim 3,
**characterized in that** the ratio of length (L) of the main conveyor line (2) to the larger diameter (d2) of the main conveyor line (2) between the infeed region (15) and the distributor head (6) is at least 25.

5. The distribution machine (1) according to at least one of the preceding claims, **characterized in that** the long main conveyor line (2) has at least two, preferably at least three, flexible hose elements.

6. The distribution machine (1) according to at least one of the preceding claims, **characterized in that** the long main conveyor line (2) has at least two bends (16), preferably with a curvature (16) of at least 90 degrees.

7. The distribution machine (1) according to any one of the preceding claims, **characterized in that** the deflector element (8) is configured to release the bypass line (13) in the block position.

8. The distribution machine (1) according to any one of the preceding claims, **characterized in that** the deflector element (8) is designed as a rocker with two rocker limbs (8a, 8b), wherein the rocker limbs (8a, 8b) respectively extend radially outward from an axis of rotation (17) of the deflector element (8).

9. The distribution machine (1) according to claim 8, **characterized in that**
- a rocker limb (8b) of the deflector element (8) is configured to block the bypass line (13) of the return device (7) in the discharge position of the deflector element (8);
- a rocker limb (8a) of the deflector element (8) is designed to block a passage between the inflow region (9) of the return device (7) and the return region (14) of the return device (7) in the discharge position of the deflector element (8); and/or
- at least one rocker limb (8a) of the deflector element (8) is configured to block a passage between the inflow region (9) of the return device (7) and the discharge region (11) of the return device (7) in the block position of the deflector element (8).

10. The distribution machine (1) according to at least one of the preceding claims, **characterized in that** the main conveyor line (2) has a pressure resistance, wherein the pressure resistance is at least one-third of the pressure difference that can be generated by the conveyor blower (3).

11. The distribution machine (1) according to at least one of the preceding claims, **characterized in that** the distribution machine (1) comprises a number of return devices (7), wherein the deflection elements (8) of a first subset of the number of return devices (7) can be passed between the discharge position and the block position, and the deflection elements (8) of a second subset, corresponding in particular to the set of the remaining return devices (7), of the number of return devices (7) are arranged in the block position, preferably permanently.

## Revendications

1. Machine de distribution pneumatique (1) pour matière granulaire, comprenant
- au moins un récipient de stockage (4) pour la matière granulaire ;
- au moins un ventilateur de transport (3) pour créer un flux d'air/de matière principale ;
- au moins une tête de distribution (6), qui est conçue pour diviser le flux d'air/de matière principal introduit dans la tête de distribution (6) en une pluralité de flux d'air/de matière individuels ;
- une longue conduite de transport principale (2) reliant le ventilateur de transport (3), le récipient de stockage (4) et la tête de distribution (6) ; et
- au moins un dispositif de rappel (7), qui présente un élément de déviation mobile (8), qui est conçu, dans une position de distribution, pour alimenter un flux d'air/de matière individuel s'écoulant dans une région d'entrée (9) du dispositif de rappel (7) vers une région de distribution (11) reliée à une conduite de distribution (10) du dispositif de rappel (7) et, dans une position d'arrêt, pour alimenter un flux d'air/de matière individuel s'écoulant dans la région d'entrée (9) du dispositif de rappel (7) vers une région de retour (14) reliée à une conduite de retour (12) du dispositif de rappel (7), dans laquelle le dispositif de rappel (7) présente une conduite de dérivation (13) reliant la région de retour (14) du dispositif de rappel (7) et la région de distribution (11) du dispositif de rappel (7) ;
**caractérisée en ce que** l'élément de déviation (8) est conçu pour bloquer la conduite de dérivation (13) dans la position de distribution.

2. Machine de distribution (1) selon la revendication 1,
**caractérisée en ce que** la longue conduite de transport principale (2) présente une section transversale traversée avec un diamètre (d1) et une longueur traversée (L), que le rapport de la longueur (L) au diamètre (d1) de la conduite de transport principale (2) est d'au moins 30.

3. Machine de distribution (1) selon au moins l'une quelconque des revendications précédentes, **caractérisée en ce que** la conduite de retour (12) du dispositif de rappel (7) est reliée à une zone d'alimentation (15) de la conduite de transport principale (2), dans laquelle la conduite de transport principale (2) présente entre la zone d'alimentation (15) et la tête de distribution (6) une section transversale plus grande avec un deuxième diamètre (d2) que dans la direction d'écoulement en amont de la zone d'alimentation (15), en particulier que dans la zone d'une buse agencée dans la direction d'écoulement en amont de la zone d'alimentation (15), laquelle est intégrée dans la conduite de transport principale (2).

4. Machine de distribution (1) selon la revendication 3,
**caractérisée en ce que** le rapport de la longueur (L) de la conduite de transport principale (2) au diamètre plus grand (d2) de la conduite de transport principale (2) entre la zone d'alimentation (15) et la tête de distribution (6) est d'au moins 25.

5. Machine de distribution (1) selon au moins l'une quelconque des revendications précédentes, **caractérisée en ce que** la longue conduite de transport principale (2) présente au moins deux, de préférence au moins trois, éléments de tuyau flexibles.

6. Machine de distribution (1) selon au moins l'une quelconque des revendications précédentes, **caractérisée en ce que** la longue conduite de transport principale (2) présente au moins deux coudes (16), de préférence avec une courbure (16) d'au moins 90 degrés.

7. Machine de distribution (1) selon l'une quelconque des revendications précédentes,
**caractérisée en ce que** l'élément de déviation (8) est conçu pour libérer la conduite de dérivation (13) dans la position d'arrêt.

8. Machine de distribution (1) selon l'une quelconque des revendications précédentes,
**caractérisée en ce que** l'élément de déviation (8) est conçu comme une bascule avec deux branches de bascule (8a, 8b), dans laquelle les branches de bascule (8a, 8b) s'étendent respectivement radialement vers l'extérieur depuis un axe de rotation (17) de l'élément de déviation (8).

9. Machine de distribution (1) selon la revendication 8, **caractérisée en ce que**
- une branche de bascule (8b) de l'élément de déviation (8) est conçue pour, dans la position de distribution de l'élément de déviation (8), bloquer la conduite de dérivation (13) du dispositif de rappel (7) ;
- une branche de bascule (8a) de l'élément de déviation (8) est conçue pour, dans la position de distribution de l'élément de déviation (8), bloquer un passage entre la zone d'entrée (9) du dispositif de rappel (7) et la zone de retour (14) du dispositif de rappel (7) ; et/ou
- au moins une branche de bascule (8a) de l'élément de déviation (8) est conçue pour, dans la position d'arrêt de l'élément de déviation (8), bloquer un passage entre la zone d'entrée (9) du dispositif de rappel (7) et la zone de distribution (11) du dispositif de rappel (7).

10. Machine de distribution (1) selon au moins l'une quelconque des revendications précédentes, **caractérisée en ce que** la conduite de transport principale (2) présente une résistance à la pression, dans laquelle la résistance à la pression est d'au moins un tiers de la différence de pression pouvant être créée par le ventilateur de transport (3).

11. Machine de distribution (1) selon au moins l'une quelconque des revendications précédentes, **caractérisée en ce que** la machine de distribution (1) comprend un certain nombre de dispositifs de rappel (7), dans laquelle les éléments de déviation (8) d'un premier sous-ensemble du nombre de dispositifs de rappel (7) peuvent être amenés entre la position de distribution et la position d'arrêt et les éléments de déviation (8) d'un second sous-ensemble, qui correspond en particulier à la quantité des dispositifs de rappel restants (7), du nombre de dispositifs de rappel (7), sont agencés, de préférence de manière durable, dans la position de blocage.
